# EUROPEAN PATENT SPECIFICATION

(11) **EP 3 269 472 B1**
(45) Date of publication and mention of the grant of the patent: **07.09.2022**
(21) Application number: 16179357.5
(22) Date of filing: 13.07.2016
(51) Int. Cl.: B22F 3/105, C22C 1/04, C22C 19/05, B29C 67/00, B22F 10/28, B33Y 10/00, B33Y 70/00, B33Y 80/00, C22C 19/00, B29C 64/153, B29C 64/30

(54) **METHOD FOR MANUFACTURING MECHANICAL COMPONENTS**
VERFAHREN ZUR HERSTELLUNG VON MECHANISCHEN KOMPONENTEN
PROCÉDÉ DE PRODUCTION DE COMPOSANTS MÉCANIQUES

(43) Date of publication of application: 17.01.2018
(73) Proprietor: Ansaldo Energia IP UK Limited, London W1G 9DQ (GB)
(72) Inventor: ETTER, Thomas, 5037 Muhen (CH); KUENZLER, Andreas, 5400 Baden (CH); GEIGER, Fabian, 8500 Frauenfeld (CH)
(74) Representative: Bernotti, Andrea

(56) References cited:
- EP-A1- 2 586 887
- EP-A1- 2 987 877
- US-A- 4 476 091
- US-A1- 2002 057 984
- Anonymous: "Super Alloy HAYNES(r) 230 (UNS N06230)", AZO Materials , 25 November 2012 (2012-11-25), pages 1-4, XP002765966, Retrieved from the Internet: URL:http://www.azom.com/article.aspx?Artic leID=7789 [retrieved on 2017-01-10]

## Description

### TECHNICAL FIELD

The present disclosure relates to a method as set forth in claim 1. It further relates to a material, in particular a nickel based alloy, and to a mechanical component.

### BACKGROUND OF THE DISCLOSURE

It has become increasingly common to manufacture mechanical components, such as engine components, from material powders by means of additive manufacturing methods which are similar to rapid prototyping. In applying such methods, no specific tooling for a component is required. Generally, said methods are based upon depositing a material powder, for instance a metal powder, and melting and resolidifying the powder at selected locations such as to form a component with a specific geometry from the resolidified material. As is apparent, these methods allow for a great flexibility of the geometry of the component to be manufactured, and allow for instance undercuts, manufacturing almost closed cavities, and the like. In particular, the powder is deposited layer by layer, each layer measuring for instance in the range of some tenth of a millimeter. The melting step is performed such as to locally melt the powder and the surface of a solidified solid volume beneath, such that the newly molten material is, after resolidification, substance bonded to an already manufactured solid volume. Such methods are for instance known as Selective Laser Melting (SLM) or Electron Beam Melting (EBM), while not being limited to these methods.

For applications in the hot gas path of turboengines and in particular gas turbine engines, dedicated high temperature alloys are used. Nickel based nickel chromium alloys containing chromium in excess of 15 wt% are used in the art for application in material temperature ranges above for instance 760 °C. Such conditions are typically found in gas turbine engines, and for an instance in the combustor regions. A typical nickel based high temperature alloy, for one instance, is known as HAYNES^{®} 230^{®}, hereinafter referred to as Haynes 230.

Nominally, Haynes 230 comprises 22 wt % of chromium, 14 wt % of thungsten, 5 wt % of cobalt, 3 wt % of iron, 2 wt % of molybdenum, 0.5 wt % of manganese, 0.4 wt % of silicon, 0.3 wt % of aluminium, 0.10 wt % of carbon, 0.02 wt % of lanthanum and 0.015 wt % of boron, and a balance of nominally 57 wt % of nickel. Herein, wt % specifies weight percent.

The specification range published in the Haynes 230 Tech Data allow contents of carbon from a minimum of 0.05 wt % to a maximum of 0.15 wt %, manganese from a minimum of 0.30 wt % to a maximum of 1.00 wt %, silicon from a minimum of 0.25 wt % to a maximum of 0.75 wt %, phosphorus up to a maximum 0.03 wt %, sulfur up to a maximum of 0.015 wt %, chromium from a minimum of 20.00 wt % to a maximum of 24.00 wt %, cobalt up to a maximum of 5.00 wt %, iron up to a maximum of 3.00 wt %, aluminium from a minimum of 0.20 wt % to a maximum of 0.50 wt %, titanium up to a maximum of 0.10 wt %, boron up to a maximum of 0.015 wt %, copper up to a maximum of 0.50 wt %, lanthanum from a minimum of 0.005 wt % to a maximum of 0,05 wt %, "tungsten from a minimum of 13.00 wt % to a maximum of 15.00 wt %, molybdenum from a minimum of 1.00 wt % to a maximum of 3.00 wt %, and a remainder to 100 wt% of nickel.

In manufacturing engine components for use at elevated temperatures by means of additive manufacturing methods of the kind outlined above, the tensile ductility of the component at said elevated temperatures of for Instance 850°C are of significant importance. It is known for instance to perform a heat treatment of the manufactured component.

EP 2 586 887 A1 discloses a method for manufacturing a mechanical component, comprising applying an additive manufacturing method, wherein the method comprises depositing a powder material and locally melting and resolidifying the powder material, thereby providing a solid body, In the method the powder material may be HAYNES(r) 230.

Other examples of known methods and materials are disclosed in EP 2 987 877 A11, in US 4 476 091 A, In US 2002/057984 A1 and in "Super Alloy HAYNES(r) 230 (UNS N06230)", (20121125), pages 1 - 4, AZO Materials, URL: http://www.azom.com/article.aspx?ArticleID=7789, (20170110), XP002765966 [X] 12,14 * Chemical Composition * [A] 1-11, 13,15

### LINEOUT OF THE SUBJECT MATTER OF THE PRESENT DISCLOSURE

It is an object of the present disclosure to propose a method of the kind initially mentioned. More specifically, the method is an additive manufacturing method. In one aspect of the present disclosure, an Improvement over the known art shall be achieved. In another aspect of the presently disclosed subject matter it is intended to provide a method which has a cost and/or time advantage over the known art.

In still a further aspect, a method shall be disclosed which results in components exhibiting superior characteristics. More specifically, components exhibiting a superior tensile ductility at elevated temperatures are strived for. In a more specific aspect, said characteristic shall be achieved at temperatures in a range for instance from 600°C to 1100°C, more specifically 700°C to 1000°C. In still more specific aspects, said tensile ductility shall reach values of larger than 20% at 850°C. In still more specific aspects, said tensile ductility shall reach values of larger than 30% at 850°C. In still more specific aspects, said tensile ductility shall reach values of larger than 40% at 850°C.

This is achieved by the subject matter described in claim 1, and further by the subject matter of the further independent claims.

Further effects and advantages of the disclosed subject matter, whether explicitly mentioned or not, will become apparent in view of the disclosure provided below. In brief, a method for manufacturing a mechanical component by means of an additive manufacturing method is disclosed, wherein a powder material is chosen with a chemical composition which is essentially the same as Haynes 230, but wherein the specification differs in certain aspects.

In more detail, disclosed is method for manufacturing a mechanical component by means of an additive manufacturing method, that is, the method comprising applying an additive manufacturing method, wherein the method comprises depositing a powder material and locally melting and resolidifying the powder material, thereby providing a solid body, the method comprising choosing a powder material of the following chemical composition:
elemental content of carbon equal to 0.04 wt %,
elemental content of manganese less than or equal to 1.00 wt %,
elemental content of silicon less than 0.25 wt %,
elemental content of phosphorus less than or equal to 0.03 wt %,
elemental content of sulfur less than or equal to 0.015 wt %,
elemental content of chromium larger than or equal to 20.00 wt % and less than or equal to 24.00 wt %,
elemental content of cobalt less than or equal to 5.00 wt %,
elemental content of iron less than or equal to 3.00 wt %,
elemental content of aluminium larger than or equal to 0.20 wt % and less than or equal to 0.50 wt %,
elemental content of titanium less than or equal to 0.10 wt %,
elemental content of boron less than or equal to 0.015 wt %,
elemental content of copper less than or equal to 0.50 wt %,
elemental content of lanthanum less than or equal to 0.10 wt %,
elemental content of tungsten larger than or equal to 13.00 wt % and less than or equal to 15.00 wt %,
elemental content of molybdenum larger than or equal to 1.00 wt % and less than or equal to 3.00 wt %,
wherein the difference of the sum of the elemental contents of all mentioned elements, and in certain instances plus eventual residual constituents, to 100 wt % is provided as nickel. The sum elemental content of residual constituents or impurities, also referred to in the art as "total all others", accounts for at maximum 0.5 wt %. It is understood that residual constituents or impurities refer to elements not mentioned in the above specification, but may be unavoidably present in the material as residues which may not be removed, or the mass fractions thereof may not be further reduced without overdue expense, and do not have a significant impact on the material performance. As noted wt % denotes weight percent.

The additive manufacturing method may comprise, while not being limited to, one of Selective Laser Melting, SLM, and Electron Beam Melting, EBM.

Also a material with the chemical composition, or the elemental contents, respectively, as disclosed and applied in any of the herein disclosed methods is disclosed. The material is provided as a powder material. It is understood that the material is a nickel based alloy and more specifically a nickel-chromium alloy.

Further, a mechanical component having the chemical composition, or the elemental contents, respectively, as disclosed and applied in any of the herein disclosed methods is disclosed. In particular, the mechanical component may have been manufactured in applying any of the methods herein disclosed. The mechanical component may be an engine component, in particular a turboengine component, and more specifically a component intended for use in a gas turbine engine.

The skilled person will readily appreciate that some residual constituents may be present in addition to the constituents listed and quantified above, and thus the nickel content may be slightly less than the difference noted above. However, it will be further appreciated that such a deviation is in a range of at maximum tenths or some hundredths or even thousandths of a weight percent, and the skilled person will still subsume these under the teaching of the present disclosure of a method, a material, and a mechanical component. For an instance, the material may contain at least one of yttrium, scandium and/or cerium. In said instance, the material may be chosen such that a sum elemental content of lanthanum plus yttrium plus scandium plus cerium accounts to less than or equal to 0.10 wt %. According to the specification above, the nickel content will generally range from 46.84 wt% to 65.76 wt%, and might, due to the presence of residuals, in extreme cases be slightly lower than the named 46.84 wt %.

It is noted that, while the specification of the material is very similar to that of Haynes 230, it exhibits different specifications than Haynes 230, which for some constituents are narrower specifications in which the material shows surprisingly good characteristics, and in particular tensile ductility. For some constituents, the specification ranges partly overlap the specification of standard Haynes 230, and partly are outside the specification range of Haynes, and insofar disclose materials outside the specification of Haynes 230. For other constituents, elemental contents may be specified which are fully outside the specification of Haynes 230.

Surprisingly, for one instance the formation of carbide precipitates shows a significant impact on the tensile ductility at elevated temperatures as are specified above. It was found that while excess carbide precipitates may compromise the tensile ductility at elevated temperatures, a certain amount of carbide precipitates is beneficial or even required for the desired tensile ductility at elevated temperatures, leading to a highly non-linear behavior of tensile ductility at elevated temperatures vs. for instance carbon content. In a further aspect, it was observed that the presence of the so-called P-phase, a tungsten-nickel-chromium-molybdenum-cobalt (W-Ni-Cr-Mo-Co) phase as well as the presence of the so-called M6C phase, a tungsten-nickel-chromium-molybdenum- (W-Ni-Cr-Mo-) carbide, show beneficial effects on the tensile ductility at elevated temperatures, and the presence of both phases might develop a synergetic effect. It is observed that at least at elevated temperatures the fraction of the P-phase decreases with increasing carbon content, while, as may be readily anticipated, the fraction of the M6C phase Increases with increasing carbon content. It was found that particularly beneficial effects are found In a range of the elemental content of carbon in a range of larger than or equal to 0.04 wt % and less than or equal to 0.10 wt % (wherein the range from larger than 0.04 wt % to less than or equal than 0.10 wt % is not part of the present invention), as compared to the Haynes 230 specification of 0.05 wt% ≤ carbon content ≤ 0.15 wt %. Investigations indicate that within this range the both mentioned phases, P and M6C, are present, resulting In a particular favorable tensile ductility of a thereof manufactured component. On the other hand, as opposed to the specification of Haynes 230, the herein disclosed material specification allows for and discloses a material with an elemental content of carbon of less than 0.05 wt%. In other words, disclosed Is a material with the chemical composition as sketched up above, and with a carbon equal to 0.04 wt %.

It was furthermore found that other constituents may exhibit an effect on the characteristics of a mechanical component manufactured according to the herein disclosed method, such as for instance tensile ductility at elevated temperature. This might be due to an effect on the formation of carbide precipitates, as well as on the P-phase, but also due to other mechanisms. Further, an effect of the fraction of the mentioned constituents on the behavior of the material during processing while performing the method may be observed.

While the specification of Haynes 230 cites the elemental content of silicon as 0.25% wt % ≤ silicon content ≤ 0.75 wt %, the herein disclosed material specification calls for a silicon fraction of less than 0.25 wt %. That is, it allows for and discloses a material wherein the elemental content of silicon is smaller than 0.25 wt% and thus out of the range known for Haynes 230. In even more specific embodiments, the silicon content is smaller than or equal to 0.20 wt %.

While the specification of Haynes 230 cites the elemental content of manganese as 0.30% wt % ≤ manganese content ≤ 1.00 wt %, the herein disclosed material specification calls for a manganese fraction of less than 1.00 wt %. That is, it allows for and discloses a material wherein the elemental content of manganese is smaller than 0.30 wt% and thus out of the range known for Haynes 230. In more specific embodiments, the manganese content is smaller than or equal to 0.50 wt %. In still more specific embodiments, the manganese content is smaller than or equal to 0.30 wt %. In even more specific embodiments, the manganese content is smaller than or equal to 0.10 wt %.

The boron content may in certain embodiments be smaller than or equal to 0.008 wt %. In still more specific embodiments, the boron content is smaller than or equal to 0.007 wt %. In even more specific embodiments, the elemental content of boron is larger than or equal to 0.004 wt % and smaller than or equal to 0.10 wt %.

While the specification of Haynes 230 cites the elemental content of lanthanum as 0.005% wt % ≤ lanthanum content ≤ 0.05 wt %, the herein disclosed material specification allows for and discloses a material wherein the elemental content of lanthanum is smaller than 0.005 wt %. Further, embodiments are disclosed wherein the sum elemental content of lanthanum plus yttrium plus scandium plus cerium is less than or equal to 0.10 wt %. That is, embodiments are disclosed wherein the lanthanum content is larger than 0.05 wt % and less than or equal to 0.10 wt %. In this respects, embodiments are disclosed wherein the lanthanum content may be lower or larger than the Haynes 230 specification range.

In certain instances, the sulfur content is limited to less than or equal to 0.005 wt %. In other instances, the phosphorus content is limited to less than or equal to 0.005 wt %.

As noted above, wt % denotes weight percent. Further, "content" or "fraction" as used above denotes the elemental content of a constituent.

The skilled person will readily appreciate that the specific ranges disclosed above apply to more specific instances of the herein disclosed method as well as to more specific instances of the herein disclosed material as well as to more specific instances of the herein disclosed mechanical component.

The following table taken from a Haynes 230 brochure the nominal composition of Haynes 230:

| **Ni** | **Cr** | **W** | **Mo** | **Fe** | **Co** | **Mn** | **Si** | **Al** | **C** | **La** | **B** |
|---|---|---|---|---|---|---|---|---|---|---|---|
| 57^{a} | 22 | 14 | 2 | 3* | 5* | 0.5 | 0.4 | 0.3 | 0.10 | 0.02 | 0.015* |

| | | | | | | | | | | | |
|---|---|---|---|---|---|---|---|---|---|---|---|
| *Maximum ^{a}As balance | | | | | | | | | | | |

It is noted that the carbon content is generally below or at most equal to the nominal carbon content. It is furthermore noted, that in the more specific disclosed instances the silicon content and the manganese content are below or at most equal to the respective nominal value.

It was found that materials with the specific elemental composition disclosed herein exhibit beneficial characteristics while manufacturing a component, in particular in applying the method as disclosed herein, and result in excellent characteristics of a mechanical component manufactured according to the herein disclosed method, such as, but not limited to, an excellent tensile ductility at elevated temperatures.

It is understood that the features and embodiments disclosed above may be combined with each other. It will further be appreciated that further embodiments are conceivable within the scope of the present disclosure and the claimed subject matter which are obvious and apparent to the skilled person.

### EXEMPLARY MODES OF CARRYING OUT THE TEACHING OF THE PRESENT DISCLOSURE

Mechanical components were manufactured applying the method known as Selective Laser Melting. The material used generally complied with the specification as disclosed herein, with the exception that the carbon content was varied. The tensile ductility of the manufactured component was tested at room temperature and at 850 °C. At room temperature, no clear correlation between the carbon content and the tensile ductility was observed. All samples showed values of roughly 40% to in excess of 50%. At 850°C, samples with carbon contents of 0.001 wt% and 0.01 wt % (outside the scope of the present invention) showed a clear deterioration of the tensile ductility to less than 20%. Samples with higher carbon contents, such as for instance 0.053 wt% and 0.070 wt % (outside the scope of the present invention), showed tensile ductility values at 850°C well above 40%. It is anticipated that an even more pronounced impact of the selection of the carbon content within tight ranges as herein specified will be observed at higher temperatures. The investigations also gave an indication that a lower silicon content might have an effect on the formation of carbide precipitates and/or the P phase, which cause a beneficial effect on the tensile ductility.

While the subject matter of the disclosure has been explained by means of exemplary embodiments, it is understood that these are in no way intended to limit the scope of the claimed invention.

## Claims

1. A method for manufacturing a mechanical component, the method comprising applying an additive manufacturing method, wherein the method comprises depositing a powder material and locally melting and resolidifying the powder material, thereby providing a solid body, the method comprising choosing a powder material of the following chemical composition:
elemental content of carbon equal to 0.04 wt %,
elemental content of manganese less than or equal to 1.00 wt %,
elemental content of silicon less than 0.25 wt %,
elemental content of phosphorus less than or equal to 0.03 wt %,
elemental content of sulfur less than or equal to 0.015 wt %,
elemental content of chromium larger than or equal to 20.00 wt % and less than or equal to 24.00 wt %,
elemental content of cobalt less than or equal to 5.00 wt %,
elemental content of iron less than or equal to 3.00 wt %,
elemental content of aluminum larger than or equal to 0.20 wt % and less than or equal to 0.50 wt %,
elemental content of titanium less than or equal to 0.10 wt %,
elemental content of boron less than or equal to 0.015 wt %,
elemental content of copper less than or equal to 0.50 wt %,
elemental content of lanthanum less than or equal to 0.10 wt %,
elemental content of tungsten larger than or equal to 13.00 wt % and less than or equal to 15.00 wt %,
elemental content of molybdenum larger than or equal to 1.00 wt % and
less than or equal to 3.00 wt %,
wherein the difference of the sum of the elemental contents of all mentioned elements plus the elemental contents of eventual residual impurities to 100 wt % is provided as nickel,
wherein residual impurities denotes all constituents apart from the named elements, and the sum mass content of all residual impurities is less than or equal to 0.5 wt %,
wherein wt % denotes weight percent.

2. The method according to any of the preceding claims, **characterized in** selecting the powder material with an elemental content of manganese of less than or equal to 0.5 wt %.

3. The method according to any of the preceding claims, **characterized in** selecting the powder material with an elemental content of boron of less than or equal to 0.008 wt %.

4. The method according to any of the preceding claims, **characterized in** selecting the powder material with a sum elemental content of lanthanum plus yttrium plus scandium plus cerium of less than or equal to 0.10 wt %.

5. The method according to any of the preceding claims, **characterized in** selecting the powder material with an elemental content of sulfur of less than or equal to 0.005 wt %.

6. The method according to any of the preceding claims, **characterized in** selecting the powder material with an elemental content of phosphorus of less than or equal to 0.005 wt %.

7. The method according to any of the preceding claims, **characterized in** comprising controlling the chemical composition of the powder material to be within the specified ranges when providing the powder material.

8. The method according to any of the preceding claims, the method comprising performing an elemental analysis of a powder material before depositing the powder material and rejecting the powder material of a single one of the specified elemental contents is out of the specified range and applying the powder material for the depositing step if all specified elemental contents are within the specified range.

9. A powder material having elemental contents as specified in any of the preceding method claims.

10. A mechanical component having a chemical composition as specified in any of the preceding method claims.

## Patentansprüche

1. Verfahren zur Herstellung eines mechanischen Bauteils, wobei das Verfahren die Anwendung eines additiven Herstellungsverfahrens umfasst, wobei das Verfahren das Ablagern eines Pulvermaterials und das lokale Schmelzen und Wiederverfestigen des Pulvermaterials umfasst, wodurch ein fester Körper geschaffen wird, wobei das Verfahren die Auswahl eines Pulvermaterials mit der folgenden chemischen Zusammensetzung umfasst:
elementarer Gehalt an Kohlenstoff gleich 0,04 Gew.-%,
elementarer Gehalt an Mangan kleiner oder gleich 1,00 Gew.-%,
elementarer Gehalt an Silicium kleiner als 0,25 Gew.-%,
elementarer Gehalt an Phosphor kleiner oder gleich 0,03 Gew.-%,
elementarer Gehalt an Schwefel kleiner oder gleich 0,015 Gew.-%,
elementarer Gehalt an Chrom größer oder gleich 20,00 Gew.-% und kleiner oder gleich 24,00 Gew.-%, elementarer Gehalt an Kobalt kleiner oder gleich 5,00 Gew.-%,
elementarer Gehalt an Eisen kleiner oder gleich 3,00 Gew.-%,
elementarer Gehalt an Aluminium größer oder gleich 0,20 Gew.-% und kleiner oder gleich 0,50 Gew.-%, elementarer Gehalt an Titan kleiner oder gleich 0,10 Gew.-%,
elementarer Gehalt an Bor kleiner oder gleich 0,015 Gew.-%,
elementarer Gehalt an Kupfer kleiner oder gleich 0,50 Gew.-%,
elementarer Gehalt an Lanthan kleiner oder gleich 0,10 Gew.-%,
elementarer Gehalt an Wolfram größer oder gleich 13,00 Gew.-% und kleiner oder gleich 15,00 Gew.-%,
elementarer Gehalt an Molybdän größer oder gleich 1,00 Gew.-% und kleiner oder gleich 3,00 Gew.-%,
wobei die Differenz der Summe der elementaren Gehalte aller genannten Elemente plus der elementaren Gehalte etwaiger restlicher Verunreinigungen zu 100 Gew.-% als Nickel bereitgestellt wird,
wobei restliche Verunreinigungen alle Bestandteile außer den genannten Elementen bezeichnen und die Summe der Massengehalte aller restlichen Verunreinigungen kleiner oder gleich 0,5 Gew.-% ist,
wobei Gew.-% Gewichtsprozent bedeutet.

2. Verfahren nach einem der vorangehenden Ansprüche, **dadurch gekennzeichnet, dass** das Pulvermaterial mit einem elementaren Gehalt an Mangan kleiner oder gleich 0,5 Gew.-% ausgewählt wird.

3. Verfahren nach einem der vorangehenden Ansprüche, **dadurch gekennzeichnet, dass** das Pulvermaterial mit einem elementaren Gehalt an Bor kleiner oder gleich 0,008 Gew.-% ausgewählt wird.

4. Verfahren nach einem der vorangehenden Ansprüche, **dadurch gekennzeichnet, dass** das Pulvermaterial mit einer Summe des elementaren Gehalts an Lanthan plus Yttrium plus Scandium plus Cer kleiner oder gleich 0,10 Gew.-% ausgewählt wird.

5. Verfahren nach einem der vorangehenden Ansprüche, **dadurch gekennzeichnet, dass** das Pulvermaterial mit einem elementaren Gehalt an Schwefel kleiner oder gleich 0,005 Gew.-% ausgewählt wird.

6. Verfahren nach einem der vorangehenden Ansprüche, **dadurch gekennzeichnet, dass** das Pulvermaterial mit einem elementaren Gehalt an Phosphor kleiner oder gleich 0,005 Gew.-% ausgewählt wird.

7. Verfahren nach einem der vorangehenden Ansprüche, **dadurch gekennzeichnet, dass** es eine Steuerung der chemischen Zusammensetzung des Pulvermaterials bei der Bereitstellung des Pulvermaterials so, dass sie innerhalb der spezifizierten Bereiche liegt, umfasst.

8. Verfahren nach einem der vorangehenden Ansprüche, wobei das Verfahren die Durchführung einer elementaren Analyse eines Pulvermaterials vor dem Ablagern des Pulvermaterials und die Verwerfung des Pulvermaterials, wenn ein einziger der spezifizierten elementaren Gehalte außerhalb des spezifizierten Bereichs liegt, und die Verwendung des Pulvermaterials für den Ablagerungsschritt, wenn alle spezifizierten elementaren Gehalte innerhalb des spezifizierten Bereichs liegen, umfasst.

9. Pulvermaterial mit elementaren Gehalten wie in einem der vorangehenden Verfahrensansprüche spezifiziert.

10. Mechanisches Bauteil mit einer chemischen Zusammensetzung wie in einem der vorangehenden Verfahrensansprüche spezifiziert.

## Revendications

1. Procédé destiné à fabriquer un élément mécanique, le procédé comprenant l'application d'un procédé de fabrication additive, dans lequel le procédé comprend le dépôt d'un matériau de poudre, une fusion locale et une resolidification du matériau de poudre, en fournissant de ce fait un corps solide, le procédé comprenant le choix d'un matériau de poudre selon la composition chimique suivante :
teneur élémentaire en carbone égale à 0,04 % en poids,
teneur élémentaire en manganèse inférieure ou égale à 1,00 % en poids,
teneur élémentaire en silicium inférieure à 0,25 % en poids,
teneur élémentaire en phosphore inférieure ou égale à 0,03 % en poids,
teneur élémentaire en soufre inférieure ou égale à 0,015 % en poids,
teneur élémentaire en chrome supérieure ou égale à 20,00 % en poids, et inférieure ou égale à 24,00 % en poids,
teneur élémentaire en cobalt inférieure ou égale à 5,00 % en poids,
teneur élémentaire en fer inférieure ou égale à 3,00 % en poids,
teneur élémentaire en aluminium supérieure ou égale à 0,20 % en poids, et inférieure ou égale à 0,50 % en poids,
teneur élémentaire en titane inférieure ou égale à 0,10 % en poids,
teneur élémentaire en bore inférieure ou égale à 0,015 % en poids,
teneur élémentaire en cuivre inférieure ou égale à 0,50 % en poids,
teneur élémentaire en lanthane inférieure ou égale à 0,10 % en poids,
teneur élémentaire en tungstène supérieure ou égale à 13,00 % en poids, et inférieure ou égale à 15,00 % en poids,
teneur élémentaire en molybdène supérieure ou égale à 1,00 % en poids, et inférieure ou égale à 3,00 % en poids,
dans lequel la différence entre 100 % en poids et la somme des teneurs élémentaires de tous les éléments mentionnés, plus les teneurs élémentaires des impuretés résiduelles en résultant, est fournie sous la forme de nickel,
dans lequel les impuretés résiduelles désignent tous les constituants indépendamment des éléments nommés, et la teneur en masse de la somme de toutes les impuretés résiduelles, est inférieure ou égale à 0,5 % en poids.

2. Procédé selon la revendication 1, caractérisé dans le choix d'un matériau de poudre qui présente une teneur élémentaire en manganèse inférieure ou égale à 0,5 % en poids.

3. Procédé selon l'une quelconque des revendications précédentes, caractérisé dans le choix d'un matériau de poudre qui présente une teneur élémentaire en bore inférieure ou égale à 0,008 % en poids.

4. Procédé selon l'une quelconque des revendications précédentes, caractérisé dans le choix d'un matériau de poudre qui présente une somme de teneurs élémentaires en lanthane, plus yttrium, plus scandium, plus cérium, inférieure ou égale à 0,10 % en poids.

5. Procédé selon l'une quelconque des revendications précédentes, caractérisé dans le choix d'un matériau de poudre qui présente une teneur élémentaire en soufre inférieure ou égale à 0,005 % en poids.

6. Procédé selon l'une quelconque des revendications précédentes, caractérisé dans le choix d'un matériau de poudre qui présente une teneur élémentaire en phosphore inférieure ou égale à 0,005 % en poids.

7. Procédé selon l'une quelconque des revendications précédentes, **caractérisé en ce qu'**il comprend le contrôle de la composition chimique du matériau de poudre de façon à se trouver dans des plages spécifiées lors de la fourniture du matériau de poudre.

8. Procédé selon l'une quelconque des revendications précédentes, le procédé comprenant l'exécution d'une analyse élémentaire d'un matériau de poudre avant de déposer le matériau de poudre, et un rejet du matériau de poudre si une seule des teneurs élémentaires se situe hors de la plage spécifiée, et l'application du matériau de poudre dans l'étape de dépôt, si toutes les teneurs élémentaires spécifiées se situent dans la plage spécifiée.

9. Matériau de poudre présentant les teneurs élémentaires spécifiées dans l'une quelconque des revendications précédentes du procédé.

10. Composant mécanique présentant une composition chimique spécifiée dans l'une quelconque des revendications précédentes du procédé.
